# EUROPEAN PATENT SPECIFICATION

(11) **EP 1 640 909 B1**
(45) Date of publication and mention of the grant of the patent: **15.11.2006**
(21) Application number: 04022716.7
(22) Date of filing: 23.09.2004
(51) Int. Cl.: G06T 3/40

(54) **System and method of adapting sub-picture data for being displayed on mini-screens**
System und Verfahren zur Anpassung von Nebenbilddaten an Minibildschirmen
Système et procédé d'adaptation de données de sous-images pour l'affichage sur miniécrans

(43) Date of publication of application: 29.03.2006
(73) Proprietor: Nero AG, 76307 Karlsbad (DE)
(72) Inventor: Lesser, Richard, 76307 Karlsbad (DE); Ley, Martin, 76307 Karlsbad (DE)
(74) Representative: Zinkler, Franz

(56) References cited:
- US-A1- 2002 067 433
- US-B1- 6 515 678
- BREUEL T M ET AL: "Paper to PDA" PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 1, 11 August 2002 (2002-08-11), pages 476-479, XP010613375 ISBN: 0-7695-1695-X

## Description

The present invention relates to a method for adapting sub-picture data for being displayed on a user device having a display screen, a resolution of which is smaller than the resolution for which the sub-picture data has been optimized for, the sub-picture data being temporally correlated with associated video data, comprising the steps of: reading sub-picture data from a source; and determining a sub-picture data portion from the read sub-picture data which has a readability value less/greater than a predetermined readability limit.

The present invention further relates to a system for carrying out the above method, the system comprising: means for reading sub-picture data from a source; and means for determining a sub-picture data portion from the read sub-picture data which has a readability value less/greater than a predetermined readability limit.

Such method and system are known from US 2002/0067433 A1.

The present invention relates generally to a system and method for adapting subpicture data for being displayed on a display with a smaller resolution (e.g. a display of a PDA), the subpicture data being temporally correlated with associated video data.

Recently, the use of Personal Digital Assistants (PDAs) became more and more popular. PDAs include small format organizers and often do not have any keypad. Control of a PDA can be accomplished by touching its screen using, for example, a pen.

A lot of different operating systems (OS) are used for PDAs, but the two main platforms are Palm OS from Palm Inc. and Pocket PC from Microsoft, who both license their system to third party manufacturers. Another PDA operating system which is popular in Europe for wireless devices is Symbian. Pocket PC 2003 is the most up-to-date OS. Features include: Pocket Internet Explorer, a new Windows Media Player, Network Access, MSN messenger, Infrared Communication, Connection Manager, Enhanced Pocket Outlook, Updated Pocket Word and Excel, and is similar in appearance to a Windows XP desktop.

Common PDAs unite a plurality of functions such as the functionality of pocket calculators, electronic telephones and address registers, notebooks, PCs and mobile phones.

Another use of a PDA, particularly a handheld PC, is displaying entertainment information such as movies, e.g., from a DVD. DVD-video data are then displayed on the PDA's screen. PDA screens can be of the type LCD (Liquid Crystal Display) like those found in notebook computers and flat panel displays which can display thousands of colors. A screen's resolution is measured by the number of pixels provided horizontally and vertically (e.g. 640 x 240). The greater the resolution the sharper the image gets. Obviously, resolutions on PDAs are limited by the compactness of the screens. On Palm Units, screens are roughly 4 inches across the diagonal with resolution up to 320 x 240.

For displaying a movie from a DVD on which the movie normally is stored in the MPEG-2 format the DVD-video data is divided and converted into a plurality of smaller data files. The conversion may be performed, for example, by "Nero Digital", Nero Digital being a next generation MPEG-4 compatible compression technology by Ahead Software AG, Germany. Nero Digital is compatible with MPEG-4 video and MPEG-4 High Efficiency AAC wherein high quality surround sounds and high definition images for home entertainment are available. Multimedia can be encoded therewith having DVD quality at only 20 % of space. Most popular simple and advanced MPEG-4 visual profiles are supported.

In this manner a DVD movie can be transferred to a handheld device, such as a PDA. However, in the future it is expected that DVDs can be playbacked on these devices using a network connection, or a USB type of connection.

Normally, DVD-video data also includes subtitles, e.g. information representing text which is spoken e.g. by actors (which is particularly helpful for hard of hearing persons or persons not understanding the language spoken).

However, since the geometrical size and resolution of the screens is smaller than the one that the subtitle has been originally been made for, subtitle text displayed thereon is difficult to read if resized with the same ratio as the underlying video. If the resize of the subpicture is done less than the video, the subpicture data might be out of the screen on the left and right side, or becomes predominant in the screen so that it is overlaying a big part of the video.

Therefore, it is an object of the present invention to provide a system and method for adapting subpicture data, particularly subtitle data, which can be displayed on small screens wherein the subpicture is sufficiently recognizable, i.e. has a satisfying resolution.

This object is achieved by a system and method as defined by the appended claims.

Upon employing this method on a conventional data file, particularly on a DVD-movie data file, subpicture data which is normally displayed in one or more character lines is converted into a corresponding plurality of single-lined subpictures. Therefore, the geometrical size can be adapted to a normal single line, and even be increased. The (geometrical) display size of the subpicture's information becomes greater, i.e. the resolution becomes better. Consequently the information is easier to recognize.

Preferably, the readability value is determined by the ratio of an area the subpicture data actually overlaps, when being displayed, and a total area the video data takes, when being displayed.

Alternatively, the readability value is obtained by determining a number of character lines, the respective character lines being displayed when the subpicture data is displayed.

This is an easy way to define which subpicture data presentation has to be adapted in order to allow a better recognition by a viewer, after this data has been re-sized.

According to a preferred embodiment of the present invention, the step of determining the subpicture data portion includes the step of determining subpicture data which is to be displayed in a number of character lines which is at least two; and determining the number of character lines.

By ensuring that an information which is originally included in two or more character lines is convertable into single-lined character chains, wherein each line of the originally several lines is convertable into a correspondingly re-sized single line, the readability is increased. The content of the original two or more lines does not need to be "pressed" into a single line, which would consequently further lower the display size thereof, but can rather be distributed over a suitable number of single lines displayed subsequently.

Moreover, it is preferred that each subpicture data portion part represents a single character line of the subpicture data portion.

Thus, it is prevented that two of, for example, initially three lines are partitioned into the same subpicture data portion part which then is possibly still not recognizable. That means, for example, for line of a originally three-lined subtitle a single-lined subtitle is generated, resulting in three single lines which are displayed subsequently.

According to another preferred embodiment the step of determining the subpicture data portion includes determining a display period thereof.

Thereby one gets the (original) time duration the subtitle data portion originally is to be displayed. This peroid can be used for calculating corresponding display periods of the subpicture data portion parts.

Advantageously, the display period includes a start time and an end time which are temporally correlated with the associated video data.

The start time determines the beginning of a display of a first subpicture data portion part which belongs to a group of sub-picture data portion parts being obtained when partitioning the corresponding subpicture data portion. The end time determines the last possible time point when the display of a last subpicture data portion part has to be completed when displaying the group of subpicture data portion parts.

According to a further preferred embodiment, the start time and the end time are assigned to the subpicture data portion parts such that the temporal correlation to the associated video data is maintained.

If the temporal correlation is maintained the subpicture data portion parts can replace the initial subpicture data portion without the need of establishing new temporal associations for a proper display.

According to a still further preferred embodiment, the method further includes the step of determining whether or not an additional subpicture data portion is present, temporally preceding or succeeding the subpicture data portion.

If no additional subpicture data portion exists temporally before and/or after a specific subpicture data portion, the display periods of the respective subpicture data portion parts generated from this corresponding specific subpicture data portion can be shifted into a direction where no additional subpicture data portion is present. Therefore, the respective display periods of the subpicture data portion parts can be extended. This further improves the readability.

Correspondingly, the total display period of all subpicture data portion parts can be greater than the display period of the original subpicture data portion itself.

Preferably, the source is a movie data file, particularly a DVD-video data file, and the file can be stored in a memory of the user device. Moreover, the subpicture data portion parts can replace the corresponding original subpicture data portion.

Therefore, the subpicture data can be displayed in a conventional manner wherein it is not necessary to change features of the playback device such as a decoder module or the like. The temporal association with the corresponding video data can be maintained, if desired, or be advantageously changed, particularly extended.

According to a still further preferred embodiment, the step of determining the number of character lines includes applying pattern recognition.

Pattern recognition is one preferred way for determining the number of character lines contained in a subpicture data portion. The pattern recognition is not dependent on a manual interaction and, therefore, the generation of subpicture data portion parts can be accelerated.

It is to be understood that the features mentioned above and those still to be explained below can be used not only in the combination respectively mentioned, but also in other combinations or in isolation without leaving the scope of the present invention as defined in the appended claims.

Examples of the invention are shown in the drawings and will be further explained in the following in more detail. In the drawings:
- Fig. 1: is a schematic perspective view of a conventional PDA;
- Fig. 2: shows a quantity of subtitle data and its subsets;
- Fig. 3: is a flow chart of a first embodiment of the method according to the present invention;
- Fig. 4: is a flow chart illustrating a second embodiment of the method of the present invention; and
- Fig. 5: is a system of the present invention.

In the following, the term "subpicture data" is used as a generic term which includes information such as subtitle, hot spot tinting, overlay graphics, etc.

On a DVD-video disc, for example, subpicture text is stored separately from a main video, usually in the form of low bit-depth (4 color) images. Separately means that the subpicture data exists apart from the main video information, specifically so that the subtitle can be displayed, or not, at a viewer's discretion.

While the DVD specification (generally MPEG-2) supports up to 32 separate subpicture data streams, any one stream is limited to just 3.36 Mbps bandwidth. To meet the bandwidth requirement as well as to simplify the process of combining them with the main video, subpictures are often composed as run-length encoded bitmaps. Each pixel in such a subpicture image is assigned as a value from a fixed palette of 16 colors.

Each subpicture pixel can be specified as one of four pixel types: background, foreground, emphasis-1 and emphasis-2. Each pixel type can have a different color and transparency value. Additionally, each subpicture pixel's color and transparency can be changed from field to field or from frame to frame. The palette as such can be changed on every program chain (PGC) transition.

Consequently, subpicture data is defined in a very efficient and flexible way that enables, e.g., extensive multi-language or other forms of program augmentation while the data stream is kept down to a manageable bitrate.

There are several ways for final display of the subpicture data on a screen, one of which is hardware mixing.

Hardware mixing involves simply taking, e.g., the subpicture text and placing it on top of the video data. Wherever a sub-picture pixel overlaps or overlays a video pixel, it replaces it, completely over-writing the video pixel underneath.

Another way is hardware alpha-blending. Hardware alpha-blending involves blending the subpicture image data with the underlying video data using varying levels of transparency, as dictated by an alpha-channel. This alpha channel contains a mask that determines how much of the subpicture data is blended with the background video data, and at what percentage.

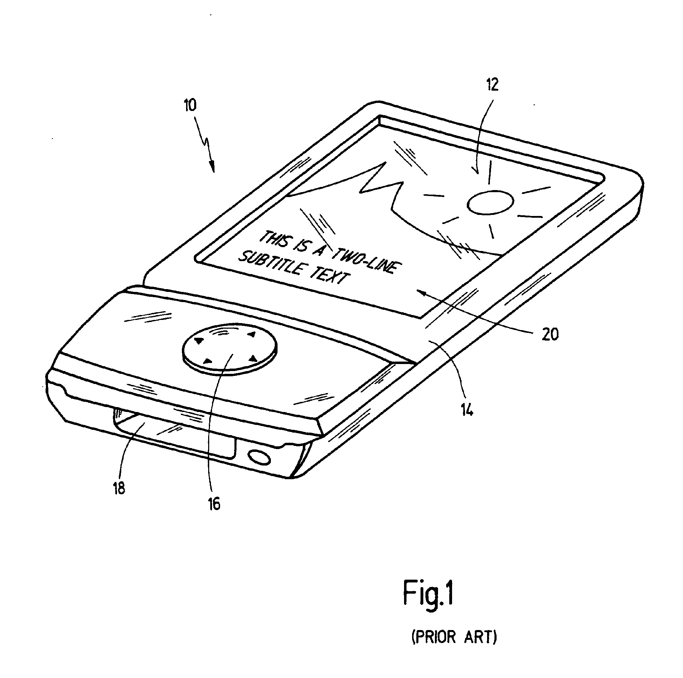

Fig. 1 shows an exemplary conventional PDA or pocket PC 10.

The PDA 10 includes a display or screen 12 such as an LCD, a housing 14, a menu selector 16 and a memory slot 18. The memory slot 18 can receive a portable memory unit which is not shown in Fig. 1. Video data can be stored in the memory unit.

The PDA 10 can also include an internal memory for storing data, particularly entertainment data such as audio files (MP3, wave files, etc.), video files (MPEG-2, MPEG-4, etc.) and the like.

In Fig. 1, the screen 12 of the PDA 10 displays a movie scene including a two-line subtitle text 20. However, the present invention is not only applicable to small screens of PDAs but also to devices (e.g. smart phones) having small sized screens and in general to all devices with a smaller resolution as the resolution for which the subpicture data has been optimized for.

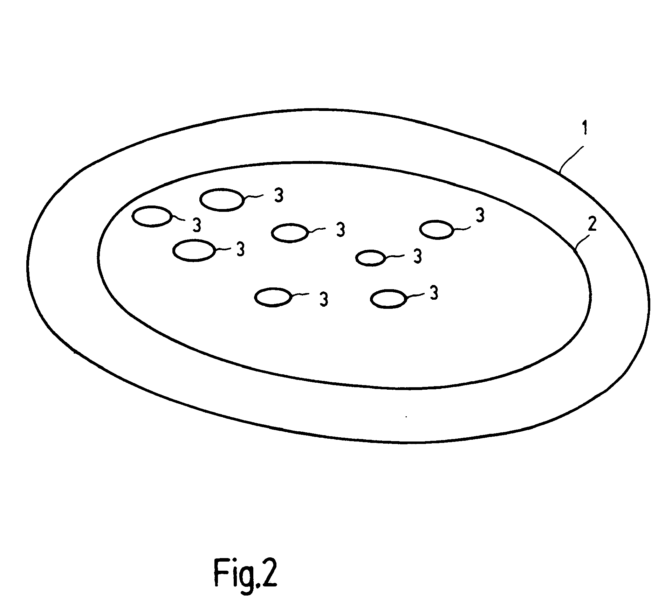

An entire quantity 1 of subpicture or subtitle data is depicted in Fig. 2.

The quantity 1 includes subpicture data which is to be adapted to be display with a high resolution on a small sized screen, and other subpicture data which does not need to be adapted since its resolution on a small sized screen is already satisfactory. The subpicture data to be adapted is indicated with reference numeral 2 and depicted as a subset of the entire subpicture data quantity 1.

The subpicture data to be adapted will be determined in one of the steps of the method according to the present invention, as will be explained below. This subpicture data to be adapted will hereinafter also be called "subpicture data portion". The seam around the subpicture data portion 2 represents data which is not to be adapted necessarily since its resolution is good enough to allow a satisfactory readability thereof on a small sized screen. Preferably the playback device "knows" that no optimization needs to be done.

On the other hand, the subpicture data portion 2, wherein there may also be a plurality (not shown) of subpicture data portions 2, can further be (sub-)divided into a plurality of subpicture data portion fragments or parts 3.

In the following, the relations explained above with respect to Fig. 2 are further explained on the basis of some exemplary subtitles, as they occur e.g. in movies, the movies can be stored on a DVD.
- #1: *"Hey, Bart! You are not supposed"*
*"to torment Lisa!"*
*"I didn't!! She's annoying ME!!"*
- #2: *"Hasta la vista, baby!"*
- #3: *"We are very happy to have you here in our fantastic show"*

The first example consists of three textual lines which contain information being actually spoken by movie characters, here by characters of the animated cartoon series "The Simpsons", i.e. the text can be heard by a viewer, and simultaneously are displayed visibly on a screen. This first example is a potential subpicture data portion candidate for being adapted according to the method of present invention, as will be explained in more detail below, in order to be displayable with a satisfactory resolution on a small sized screen.

The first example represents in the light of Fig. 2 a subpicture data portion 2, which may have a display period of 12 s, for example. This portion 2 can be divided into three subpicture data portion parts 3, the first being represented by the first line, i.e. by *"Hey, Bart! You are not supposed",* the second part by the second line *"to torment Lisa!",* and the third part by *"I didn't!! She's annoying ME!!"*

As will also be explained in more detail below, these three subpicture data portion parts 3 may be assigned either equal (4s each) or different display periods (e.g. 5s - 2s - 5s) depending on a respective length of each of the parts 3.

The second example may represent a textual single-lined subtitle which does not need to be adapted since it may be regarded as having a sufficient readability.

The third example is also a single-lined subtitle. However, it is much longer in comparison to the second example. Displaying the third exemplary subtitle on a small sized screen may be difficult for a viewer to read. Therefore, even a single-line subtitle can be divided into parts 3. In the case of example # 3, a first part 3 could be represented by *"We are very happy* to *have you"* wherein the rest (i.e. "*here in our fantastic show!")* is represented by a second part 3, both parts 3 being adapted to be displayed as single-line subtitles each having either half of the display period of the original subpicture data portion (i.e. of *"We are very happy to have you here in our fantastic show")* or any other arbitrary (possible) display period division.

Preferably the resolution change for the subtitles doesn't change throughout the playback, or it changes always for adapting to the space available.

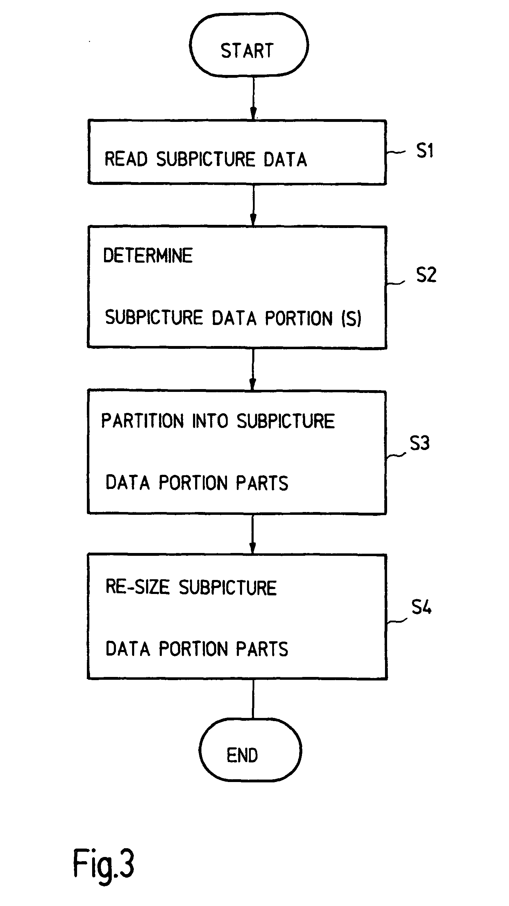

Fig. 3 shows a first embodiment of the method of the present invention.

In a first step S1 subpicture data are read or received from a source, e.g. from a DVD-movie disc, for providing base subpicture data which is to be adapted, if necessary.

In step S2 it is determined from the data read in step S1 if a subpicture data portion is present. As mentioned above, a sub-picture data portion is an amount of data which belongs to the read subpicture data, wherein a readability thereof is poor. Subpicture data having a poor readability is selected from the read subpicture data and hereinafter referred to as subpicture data portion. However, generally not all of the read subpicture data are classified as poor.

Hence, a readability value is determined for each of the read subpicture data. The readability value can be defined in many different ways depending on the type of the subpicture data such as the file format in which the data are stored.

If the subpicture data are stored, for example, as bitmaps, the readability value could be determined by detecting the actual visual overlap percentage of the subpicture data when being mapped on associated video data. For example, if a subtitle is initially displayed with a very small font size, the actual visual overlap percentage, and therefore the resolution, is rather low. This might also happen when, for example, only a single line of subtitle is displayed by a corresponding bitmap. In such a case, a probability that a predetermined readability limit, which can be a predetermined resolution, is remained under is rather high. In this manner, the subpicture data portion can be detected when the readability value is less than the readability limit.

Alternatively, the readability value can be based on a number of subtitle lines to be displayed (cf. example #1 above). If the number of subtitle lines is high, i.e. more than one, it is likely that the respective lines become harder to read, particularly when displayed on a very small screen such as an LCD of a pocket PC. In this case, the readability limit can be defined as a maximum number of subtitle lines which are (still) allowed to be displayed without the need to change the presentation thereof. However, in general, already two subtitle lines being displayed simultaneously are hardly recognizable on a mini-screen.

In step S3 the subpicture data portion is partitioned into at least two subpicture data portion parts. Then these subpicture data portion parts are re-sized. By the step of partitioning the subpicture data portion the amount of subpicture data, which has to be displayed at once, is reduced. This allows to re-size the respective parts to a (geometrical) size (i.e. resolution) which is well recognizable for a viewer.

Of course, this might also cause an adaptation of a display timing. Adaptation of display timing will be explained below.

Alternatively, the so-generated subpicture data portion parts may be stored for repeated playback operations (not shown in Fig. 3).

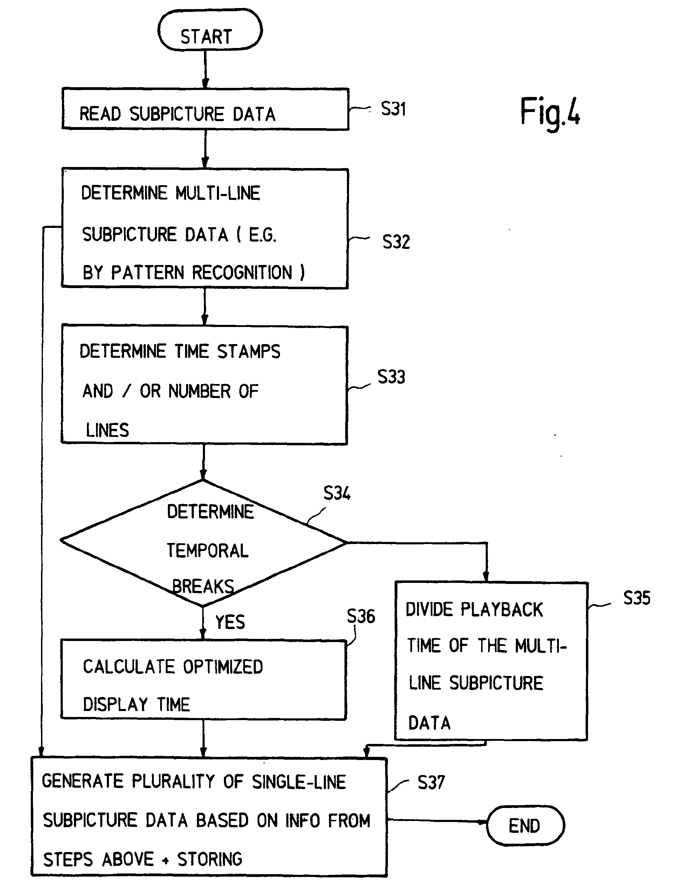

In Fig. 4 a second embodiment of the method of the present invention is schematically shown.

In a first step S31 subpicture data which are included in video data such as, for example, MPEG-2 data and which are temporally correlated therewith are read into a memory of a data processing unit such as, for example, a PC.

If the data are provided on a DVD-video disc, the data are normally stored in the MPEG-2 file format. A playback device such as, for example, the PDA 10 of Fig. 1 recognizes DVD-video data by a directory entitled "VIDEO_TS". This directory contains, in the MPEG-2 standard, all files relevant for display. The directory VIDEO_TS contains files having one of the following three endings '.IOF', '.BUP, ', and '.VOB'. The '.IFO' ending represents index files. The 'BUP' endings represent corresponding backup files. The actual audio and/or video data is contained in files having the endings '.VOB' (Video Object).

VOB files contain audio data, video data and/or subtitle data which are multiplexed. In order to play back, the playback device first has to de-multiplex the data. A VOB file, in turn, also includes a navigation pack (NV_PCK) which contains jump instructions and timing information, and one or more Group of Pictures (GOP) which, in turn, comprise video packs (V_PCK), audio packs (A_PCK) and subtitle packs (SP_PCK), i.e. the actual video/audio and/or subtitle data.

All this information is read in step S31 for allowing especially the subpicture data, e.g. the subtitle data, to be analyzed. Subtitle data are often stored in the bitmap format '.bmp'. During playback the subtitle bitmaps are overlaid with the actual video data. However, even if the subtitle data are not stored in the bitmap format 'bmp', the method of the present invention can still be carried out. Another subtitle format merely influences the way in which the subtitle data are to be analyzed.

In the second step 532, it is determined which of the subpicture data represents a multi-line subpicture data, e.g. by pattern recognition. Multi-line subpicture data represents, for example, subtitle which is to be displayed in two or more lines. As shown exemplarily in Fig. 1, the subtitle 20 is displayed in two lines. However, since the display 12 of the PDA 10 is very small, e.g. only 4 inches in diagonal, character size becomes really small. The subtitle text 20 is hardly readable.

Thus, in step S32 subtitle data which are displayed in two or more lines are identified for further processing.

In a third step S33 time stamps of corresponding video data, i.e. start time and end time, can be determined. The video data are associated with the multi-line subpicture data which have been determined in the step S32.

Alternatively, only the number of (subtitle) lines of the multi-line subpicture data also can be determined. The number of lines can be used for calculating the display time for each of the single-lined subtitles to be generated.

Of course, both the number of lines and the time stamps can be determined in step S33 in common.

In a further step S34, it can be determined whether or not temporal breaks or interruptions are present. This means, it is determined whether or not further subtitle is to be displayed either temporally before and/or after the actual subtitle data which is determined in step S32. Sometimes several multi-lined subtitles are to be displayed one after the other. In this case, there is no temporal break in the subtitle's temporal stream. Hence, the available time for displaying the respective subtitle is fixed.

If it is determined that no temporal break is present, i.e. there are further subpicture data portion temporally preceding and/or succeeding, the display time of this actual subpicture data portion can readily be divided by the number of charcter lines which is also determined in step S3 for getting the time available for the respective subtitles.

For instance, if the number of a subtitle lines which are to be displayed at once is 3 and the display time for this three-lined subtitle data is 18 seconds, the display time being available for each of the single lines is 6 seconds.

It is also possible to divide the available time in a different manner, e.g. 3s + 4s + 11s or 3s+1sP+4s+1sP+9s (1sP means 1 second pause in between, but could be of course also 5 s pause as example). This decision could be made dependent on the respective length, i.e. the semantic content, of each subtitle line.

On the other hand, if it is determined in step S34 that there are temporal breaks, i.e. either temporally before and/or after the multi-line subpicture data determined in the step S32, an optimized display time can be calculated in a step S36.

Optimized display time means that it can be, e.g., extended. For example, after a three-lined subtitle phase in a movie there is a subtitle pause in which no information has to be displayed. Depending on the length of this pause the length of display time of one or all the single-lined subtitles, which are to be generated instead of the initial multi-lined subtitle, can be varied.

Again, depending on the semantic content of each single-lined subtitle the display time can be adapted correspondingly.

In a step S37, a plurality of single-line subpicture data is generated using the information obtained in the preceding steps. The geometrical display size, e.g. the character size, of the respective single-line subpicture data can be adapted to the size of a corresponding (original) single-lined subtitle.

If desired, the size can also be increased since merely single-line subpicture data are to be displayed after the method of the present invention has been employed to data containing multi-line subpicture data. Even the size of originally single-line subpicture data can be increased in order to improve the readability of the subtitle.

After the single-line subpicture data is generated, this data can be stored either in the source from which the original data were read or in another memory.

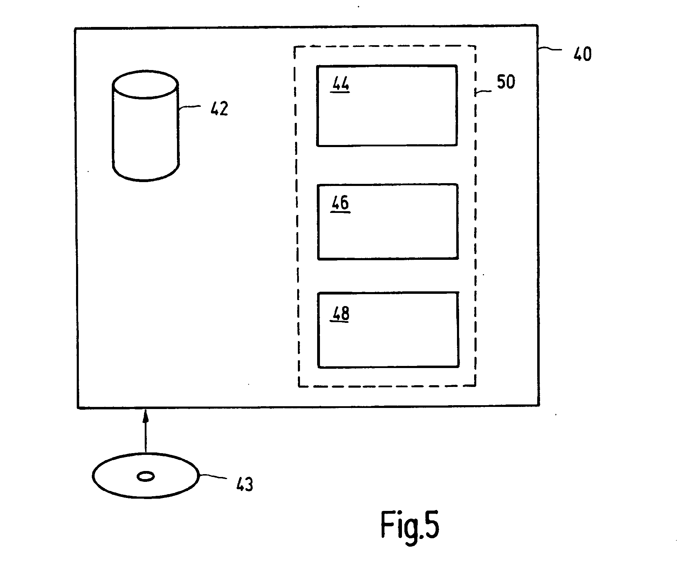

Fig. 5 is a block diagram showing a system 40 according to the present invention.

The system 40 of Fig. 5 can be implemented, e.g., by a PC or the like. It includes a memory 42 into which the subpicture data can be read, for example, from a DVD 43 or any other proper storage medium. The system further includes means 44 for reading the subpicture data, means for determining 46 a subpicture portion, and means 48 for partitioning and re-sizing. The means 44, 46, and 48 can be implemented, for example, by a mircroprocessor or a CPU 50.

It is to be understood that subpicture data may not only display text lines, but also character lines representing menus, navigation icons and the like.

The method of the present invention can be implemented as software and/or as hardware. Therefore, a computer system or a data processing system can be provided, being adapted to carry out the method of the present invention. The invention may also be implemented as a software tool or even in a DVD playback device. A computer readable medium may be one of a CD-ROM, DVD, floppy disc, hard disc, etc.

The examples given above for defining the readability value are only of exemplary nature and not intended to limit the definition. The readability value can also be defined by the area (in the sense of a bar) a subtitle line takes, when displayed, independent of the actual overlap of the subtitle pixels over the video pixels.

Further, it is apparent that all subpicture data can be adapted in order to obtain a standardized resolution of the subpicture data on small sized screens.

Alternatively, the subpicture data portion parts 3 could also be combined again such that they form a continuous text which runs through the screen, preferably as a horizontal band.

While the invention has been particularly shown with reference to a preferred embodiment thereof, it will be understood by those skilled in the art that various other changes in the form and details may be made therein without departing from the scope of the invention as defined by the appended claims.

## Claims

1. A method for adapting subpicture data for being displayed on a user device (10) having a display screen (12), a resolution of which is smaller than the resolution for which the subpicture data has been optimized for, the subpicture data being temporally correlated with associated video data, comprising the steps of:
reading (S1) subpicture data (1) from a source;
determining (S2) a subpicture data portion (2) from the read subpicture data (1) which has a readability value less/greater than a predetermined readability limit; and
partitioning (S3) the subpicture data portion (2) into at least two subpicture data portion parts (3), and re-sizing (S4) the subpicture data portion parts (3) such that each of the subpicture data portion parts (3) has a readability value which is equal to or greater than/equal to or less than the predetermined readability limit,
**characterized in that** the step of determining (S2) a subpicture data portion includes the step of calculating a data portion display period for the subpicture data portion and of calculating part display periods for the at least two subpicture data portion parts using the portion display period for a subsequent display of the at least two subpicture data portion parts.

2. The method of claim 1, wherein the readability value is obtained by the ratio of an area the original subpicture data actually overlaps when being displayed and a total area the video data takes, when being displayed.

3. The method of claim 1, wherein the readability value is obtained by determining a number of character lines, the respective character lines being displayed when the subpicture data is displayed.

4. The method of claim 3, wherein the step of determining (52) the subpicture data portion (3) includes the step of determining (S32) subpicture data which is to be displayed in a number of character lines which is at least two; and determining (S33) the number of character lines.

5. The method of claim 4, wherein for each character line of the subpicture data portion (2) respectively one subpicture data portion part (3) having a predetermined display size is generated.

6. The method of claim 1, further comprising the step of storing the at least two subpicture data portion parts (3) in the source or in another memory.

7. The method of claim 6, wherein the display period includes a start time and an end time which are temporally correlated with the associated video data, respectively.

8. The method of claim 7, wherein the start and the end times are assigned to the subpicture data portion parts (3) such that the temporal correlation between the subpicture data portion (2) and the video data associated thereto is maintained.

9. The method of claim 6, further including the step of determining (S34) whether or not a further subpicture data portion (2) is present, the further subpicture data portion (2) temporally preceding or succeeding the subpicture data portion (2).

10. The method of claim 9, wherein Start and end times of each of the subpicture data portion parts are optimized (S36), if no further subpicture data portion is present.

11. The method of claim 10, wherein a total display period of the subpicture data portion parts (3) is greater than a display period of the corresponding subpicture data portion (2).

12. The method of one of the preceding claims, wherein the source is a movie data file, particularly a DVD-video data file.

13. The method of claim 12, wherein the file is stored in a memory of the user device (10).

14. The method of one of the preceding claims, wherein the stored subpicture data portion parts (3) replace the corresponding subpicture data portion (2).

15. The method of claim 4, wherein the step of determining (S33) the number of character lines includes applying pattern recognition.

16. The method of one of the preceding claims, wherein the subpicture data (1) is subtitle data.

17. The method of one of the preceding claims, wherein the step of re-sizing is performed such that a desired resolution for the subpicture data is the same for all the subpicture data after carrying the method steps above.

18. The method of one of claims 1 to 16, wherein the step of re-sizing is performed such that different desired resolutions are obtained for the subpicture data after carrying the method steps above.

19. The method of one of the preceding claims, wherein the subpicture portion parts (3) are combined such that they form a continuous band which is displayable running through the screen.

20. A data processing system (40), comprising:
means (44) for reading subpicture data (1) from a source;
means (46) for determining a subpicture data portion (2) from the read subpicture data (1) which has a readability value less/greater than a predetermined readability limit; and
means (48) for partitioning the subpicture data portion (2) into at least two subpicture data portion parts (3), and for re-sizing the subpicture data portion parts (3) such that each of the subpicture data portion parts (3) has a readability value which is equal to or greater than/equal to or less than the predetermined readability limit,
**characterised in that** means for determining (S2) a subpicture data portion is adapted for calculating a data portion display period for the subpicture data portion and of calculating part display periods for the at least two subpicture data portion parts using the portion display period for a subsequent display of the at least two subpicture data portion parts.

21. A computer program comprising computer program code which, when executed an a data processing system, enables the data processing system to carry out the method of one of claims 1 to 19.

22. A computer program of claim 21, which is stored on a computer-readable medium.

23. A computer program of claim 21, implemented as a signal for transmission over the Internet.

24. A computer program of claim 21, implemented as a software tool.

25. A computer program of claim 21, being implemented as a computer program product.

## Patentansprüche

1. Ein Verfahren zum Anpassen von Unterbilddaten, die auf einem Benutzergerät (10) mit einem Anzeigebildschirm (12) angezeigt werden sollen, wobei eine Auflösung derselben kleiner ist als die Auflösung, für die die Unterbilddaten optimiert wurden, wobei die Unterbilddaten mit zugeordneten Videodaten zeitlich korreliert sind, wobei das Verfahren folgende Schritte umfasst:
Lesen (S1) von Unterbilddaten (1) von einer Quelle;
Bestimmen (S2) eines Unterbilddatenabschnitts (2) von den gelesenen Unterbilddaten (1), der einen Lesbarkeitswert aufweist, der geringer oder größer ist als eine vorbestimmte Lesbarkeitsgrenze; und
Unterteilen (S3) des Unterbilddatenabschnitts (2) in zumindest zwei Unterbilddatenabschnittsteile (3), und Neu-Dimensionieren (S4) der Unterbilddatenabschnittsteile (3), so dass jeder der Unterbilddatenabschnittsteile (3) einen Lesbarkeitswert aufweist, der gleich oder größer/ gleich oder geringer ist als die vorbestimmte Lesbarkeitsgrenze,
**dadurch gekennzeichnet, dass** der Schritt des Bestimmens (S2) eines Unterbilddatenabschnitts den Schritt des Berechnens einer Datenabschnittanzeigeperiode für den Unterbilddatenabschnitt umfasst, und des Berechnens von Teilanzeigeperioden für die zumindest zwei Unterbilddatenabschnittsteile unter Verwendung der Abschnittsanzeigeperiode für eine nachfolgende Anzeige der zumindest zwei Unterbilddatenabschnittsteile.

2. Das Verfahren gemäß Anspruch 1, bei dem der Lesbarkeitswert erhalten wird durch das Verhältnis einer Fläche, die die ursprünglichen Unterbilddaten tatsächlich überlappen, wenn dieselben angezeigt werden, und einer Gesamtfläche, die die Videodaten einnehmen, wenn dieselben angezeigt werden.

3. Das Verfahren gemäß Anspruch 1, bei dem der Lesbarkeitswert erhalten wird durch Bestimmen einer Anzahl von Zeichenzeilen, wobei die jeweiligen Zeichenzeilen angezeigt werden, wenn die Unterbilddaten angezeigt werden.

4. Das Verfahren gemäß Anspruch 3, bei dem der Schritt des Bestimmens (52) des Unterbilddatenabschnitts (3) den Schritt des Bestimmens (S32) von Unterbilddaten umfasst, die in einer Anzahl von Zeichenzeilen, die zumindest Zwei beträgt, anzuzeigen sind; und
Bestimmen (S33) der Anzahl von Zeichenzeilen.

5. Das Verfahren gemäß Anspruch 4, bei dem für jede Zeichenzeile des Unterbilddatenabschnitts (2) jeweils ein Unterbilddatenabschnittsteil (3) mit einer vorbestimmten Anzeigegröße erzeugt wird.

6. Das Verfahren gemäß Anspruch 1, das ferner den Schritt des Speicherns der zumindest zwei Unterbilddatenabschnittsteile (3) in der Quelle oder einem anderen Speicher umfasst.

7. Das Verfahren gemäß Anspruch 6, bei dem die Anzeigeperiode eine Anfangszeit und eine Endzeit umfasst, die jeweils mit den zugeordneten Videodaten zeitlich korreliert sind.

8. Das Verfahren gemäß Anspruch 7, bei dem die Anfangs- und die Endzeit den Unterbilddatenabschnittsteilen (3) zugewiesen sind, so dass die zeitliche Korrelation zwischen dem Unterbilddatenabschnitt (2) und den Videodaten, die demselben zugeordnet sind, beibehalten wird.

9. Das Verfahren gemäß Anspruch 6, das ferner den Schritt des Bestimmens (S34) umfasst, ob ein weiterer Unterbilddatenabschnitt (2) vorliegt oder nicht, wobei der weitere Unterbilddatenabschnitt (2) dem Unterbilddatenabschnitt (2) zeitlich vorangeht oder folgt.

10. Das Verfahren gemäß Anspruch 9, bei dem Anfangs- und Endzeiten von jedem der Unterbilddatenabschnittsteile optimiert werden (S36), falls kein weiterer Unterbilddatenabschnitt vorliegt.

11. Das Verfahren gemäß Anspruch 10, bei dem eine Gesamtanzeigeperiode der Unterbilddatenabschnittsteile (3) größer ist als eine Anzeigeperiode des entsprechenden Unterbilddatenabschnitts (2).

12. Das Verfahren gemäß einem der vorhergehenden Ansprüche, bei dem die Quelle eine Filmdatendatei ist, insbesondere eine DVD-Videodatendatei.

13. Das Verfahren gemäß Anspruch 12, bei dem die Datei in einem Speicher des Benutzergeräts (10) gespeichert ist.

14. Das Verfahren gemäß einem der vorhergehenden Ansprüche, bei dem die gespeicherten Unterbilddatenabschnittsteile (3) den entsprechenden Unterbilddatenabschnitt (2) ersetzen.

15. Das Verfahren gemäß Anspruch 4, bei dem der Schritt des Bestimmens (S33) der Anzahl von Zeichenzeilen das Anwenden von Mustererkennung umfasst.

16. Das Verfahren gemäß einem der vorhergehenden Ansprüche, bei dem die Unterbilddaten (1) Untertiteldaten sind.

17. Das Verfahren gemäß einem der vorhergehenden Ansprüche, bei dem der Schritt des Neu-Dimensionierens durchgeführt wird, so dass nach dem Ausführen der obigen Verfahrensschritte eine gewünschte Auflösung für die Unterbilddaten für alle Unterbilddaten gleich ist.

18. Das Verfahren gemäß einem der Ansprüche 1 bis 16, bei dem der Schritt des Neu-Dimensionierens durchgeführt wird, so dass nach dem Ausführen der obigen Verfahrensschritte unterschiedliche gewünschte Auflösungen für die Unterbilddaten erhalten werden.

19. Das Verfahren gemäß einem der vorherigen Ansprüche, bei dem die Unterbildabschnittsteile (3) kombiniert werden, so dass dieselben ein durchlaufendes Band bilden, das durch den Bildschirm verlaufend anzeigbar ist.

20. Ein Datenverarbeitungssystem (40), das folgende Merkmale umfasst:
eine Einrichtung (44) zum Lesen von Unterbilddaten (1) von einer Quelle;
eine Einrichtung (46) zum Bestimmen eines Unterbilddatenabschnitts (2) von den gelesenen Unterbilddaten (1), der einen Lesbarkeitswert aufweist, der geringer oder größer ist als eine vorbestimmte Lesbarkeitsgrenze; und
eine Einrichtung (48) zum Unterteilen des Unterbilddatenabschnitts (2) in zumindest zwei Unterbilddatenabschnittsteile (3), und zum Neu-Dimensionieren der Unterbilddatenabschnittsteile (3), so dass jeder der Unterbilddatenabschnittsteile (3) einen Lesbarkeitswert aufweist, der gleich oder größer/gleich oder geringer ist als die vorbestimmte Lesbarkeitsgrenze,
**dadurch gekennzeichnet, dass** die Einrichtung zum Bestimmen (S2) eines Unterbilddatenabschnitts angepasst ist zum Berechnen einer Datenabschnittsanzeigeperiode für den Unterbilddatenabschnitt, und zum Berechnen von Teilanzeigeperioden für die zumindest zwei Unterbilddatenabschnittsteile, unter Verwendung der Abschnittsanzeigeperiode für eine nachfolgende Anzeige der zumindest zwei Unterbilddatenabschnittsteile.

21. Ein Computerprogramm, das Computerprogrammcode umfasst, der, wenn er auf einem Datenverarbeitungssystem ausgeführt wird, das Datenverarbeitungssystem aktiviert, um das Verfahren gemäß einem der Ansprüche 1 bis 19 auszuführen.

22. Ein Computerprogramm gemäß Anspruch 21, das auf einem computerlesbaren Medium gespeichert ist.

23. Ein Computerprogramm gemäß Anspruch 21, das als ein Signal für Übertragung über das Internet implementiert ist.

24. Ein Computerprogramm gemäß Anspruch 21, das als ein Software-Tool implementiert ist.

25. Ein Computerprogramm gemäß Anspruch 21, das als ein Computerprogrammprodukt implementiert ist.

## Revendications

1. Procédé pour adapter des données de sous-image destinées à être affichées sur un dispositif d'usager (10) ayant un écran d'affichage (12) dont la résolution est inférieure à la résolution pour laquelle les données de sous-image ont été optimisées, les données de sous-image étant corrélées dans le temps avec les données vidéo associées, comprenant les étapes consistant à:
lire (S1) les données de sous-image (1) d'une source ;
déterminer (S2) une portion de données de sous-image (2) à partir des données de sous-image de lecture (1) qui ont une valeur de lisibilité inférieure/ supérieure à une limite de lisibilité prédéterminée ; et
diviser (S3) la portion de données de sous-image (2) en au moins deux parties de portion de données de sous-image (3), et redimensionner (S4) les parties de portion de données de sous-image (3) de sorte que chacune des parties de portion de données de sous-image (3) ait une valeur de lisibilité qui est égale ou supérieure/égale ou inférieure à la limite de lisibilité prédéterminée,
**caractérisé par le fait que** l'étape de détermination (S2) d'une portion de données de sous-image comprend l'étape destinée à calculer une période d'affichage de portion de données pour la portion de données de sous-image et à calculer les périodes d'affichage de partie pour au moins deux parties de portion de données de sous-image utilisant la période d'affichage de portion pour l'affichage successif d'au moins deux partiess de portion de données de sous-image.

2. Procédé selon la revendication 1, dans lequel la valeur de lisibilité est obtenue par le rapport entre une superficie que les données de sous-image initiales recouvrent effectivement lorsqu'elles sont affichées et une superficie totale que les données vidéo occupent lorsqu'elles sont affichées.

3. Procédé selon la revendication 1, dans lequel la valeur de lisibilité est obtenue en déterminant un nombre de lignes de caractères, les lignes de caractères respectives étant affichées lorsque les données de sous-image sont affichées.

4. Procédé selon la revendication 3, dans lequel l'étape de détermination (52) de la partie de données de sous-image (3) comprend l'étape destinée à déterminer (S32) les données de sous-image qui doivent être affichées dans un nombre de lignes de caractères qui est au moins de deux ; et à déterminer (S33) le nombre de lignes de caractères.

5. Procédé selon la revendication 4, dans lequel est respectivement générée, pour chaque ligne de caractère de la portion de données de sous-image (2), une partie de portion de données de sous-image (3) ayant une grandeur d'affichage prédéterminée.

6. Procédé selon la revendication 1, comprenant, par ailleurs, l'étape consistant à mémoriser les au moins deux parties de portion de données de sous-image (3) dans la source ou dans une autre mémoire.

7. Procédé selon la revendication 6, dans lequel la période d'affichage comprend un moment de début et un moment de fin qui sont respectivement corrélés dans le temps avec les données vidéo associées.

8. Procédé selon la revendication 7, dans lequel le moment de début et le moment de fin sont attribués aux parties de portion de données de sous-image (3) de sorte que soit maintenue la corrélation dans le temps entre la portion de données de sous-image (2) et les données vidéo associées à cette dernière.

9. Procédé selon la revendication 6, comprenant, par ailleurs, l'étape destinée à déterminer (S34) s'il est présent ou non une autre portion de données de sous-image (2), l'autre portion de données de sous-image (2) précédant ou suivant dans le temps la partie de données de sous-image (2).

10. Procédé selon la revendication 9, dans lequel le moment de début et le moment de fin de chacune des parties de portion de données de sous-image sont optimisés (S36), s'il n'est pas présent d'autre portion de données de sous-image.

11. Procédé selon la revendication 10, dans lequel la période d'affichage totale des parties de portion de données de sous-image (3) est supérieure à une période d'affichage de la portion de données de sous-image correspondante (2).

12. Procédé selon l'une des revendications précédentes, dans lequel la source est un fichier de données de film, plus particulièrement un fichier de données vidéo de DVD.

13. Procédé selon la revendication 12, dans lequel le fichier est mémorisé dans une mémoire du dispositif d'usager (10).

14. Procédé selon l'une des revendications précédentes, dans lequel les parties de portion de données de sous-image (3) mémorisées remplacent la portion de données de sous-image correspondante (2).

15. Pprocédé selon la revendication 4, dans lequel l'étape de détermination (S33) du nombre de lignes de caractères comprend l'application de reconnaissance de formes.

16. Procédé selon l'une des revendications précédentes, dans lequel les données de sous-image (1) sont des données de sous-titres.

17. Procédé selon l'une des revendications précédentes, dans lequel l'étape de redimensionnement est effectuée de sorte qu'une résolution désirée pour les données de sous-image soit la même pour toutes les données de sous-image après la réalisation des étapes de procédé ci-dessus.

18. Procédé selon l'une des revendications 1 à 16, dans lequel l'étape de redimensionnement est effectuée de sorte que soient obtenues différentes résolutions désirées pour les données de sous-image après la réalisation des étapes de procédé ci-dessus.

19. Procédé selon l'une des revendications précédentes, dans lequel les parties de portion de sous-image (3) sont combinées de sorte qu'elles forment une bande continue qui peut être affichée en passant à l'écran.

20. Système de traitement de données (40), comprenant:
un moyen (44) pour lire les données de sous-image (1) d'une source ;
un moyen (46) pour déterminer une portion de données de sous-image (2) à partir des données de sous-image de lecture (1) qui ont une valeur de lisibilité inférieure/supérieure à une limite de lisibilité prédéterminée ; et
un moyen (48) pour diviser la portion de données de sous-image (2) en au moins deux parties de portion de données de sous-image (3), et pour redimensionner les parties de portion de données de sous-image (3) de sorte que chacune des parties de portion de données de sous-image (3) ait une valeur de lisibilité égale ou supérieure/égale ou inférieure à la limite de lisibilité prédéterminée,
**caractérisé par le fait que** le moyen de détermination (S2) d'une portion de données de sous-image est adapté pour calculer une période d'affichage de portion de données pour la portion de données de sous-image et pour calculer les périodes d'affichage de partie pour les au moins deux parties de portion de données de sous-image utilisant la période d'affichage de partie pour l'affichage successif des au moins deux parties de portion de données de sous-image.

21. Programme d'ordinateur comprenant un code de programme d'ordinateur qui, lorsqu'il est exécuté sur un système de traitement de données, permet au système de traitement de données de réaliser le procédé selon l'une des revendications 1 à 19.

22. Programme d'ordinateur selon la revendication 21, qui est mémorisé sur un support lisible par un ordinateur.

23. Programme d'ordinateur selon la revendication 21, mis en oeuvre comme signal pour la transmission sur Internet.

24. Programme d'ordinateur selon la revendication 21, mis en oeuvre comme un outil de logiciel.

25. Programme d'ordinateur selon la revendication 21, mis en oeuvre comme produit de programme d'ordinateur.
